# EUROPÄISCHE PATENTSCHRIFT

(11) **EP 3 611 079 B1**
(45) Veröffentlichungstag und Bekanntmachung des Hinweises auf die Patenterteilung: **08.12.2021**
(21) Anmeldenummer: 18188643.3
(22) Anmeldetag: 13.08.2018
(51) Int. Cl.: B62D 21/11

(54) **HILFSRAHMEN FÜR KRAFTFAHRZEUGE**
SUBFRAME FOR MOTOR VEHICLES
CADRE AUXILIAIRE POUR VÉHICULES AUTOMOBILES

(43) Veröffentlichungstag der Anmeldung: 19.02.2020
(73) Patentinhaber: Autotech Engineering Deutschland GmbH, 33647 Bielefeld (DE); Autotech Engineering S.L., 48340 Amorebieta-Etxano (ES); GESTAMP MANUFACTURING AUTOCHASSIS, S.L., 50690 Pedrola (Zaragoza) (ES); GESTAMP METALBAGES, S.A., 08251 Santpedor, Barcelona (ES)
(72) Erfinder: Bedson, Jamie, Harrogate, Yorkshire HG1 4FE (GB); Littlefield, Michael, Newcastle Upon Tyne, Tyne and Wear NE6 5TB (GB); Dunkinson, Scott, Pity Me, Durham DH1 5RU (GB)
(74) Vertreter: Cohausz & Florack

(56) Entgegenhaltungen:
- EP-A1- 2 990 308
- EP-A1- 3 020 618
- WO-A1-2018/065510

## Beschreibung

Die Erfindung betrifft einen Hilfsrahmen für ein Kraftfahrzeug, mit einer Unterschale, einer Oberschale und mindestens zwei voneinander beabstandeten, gegenüber der Oberseite der Oberschale nach oben vorstehenden, turmförmigen Anbindungsgliedern, wobei die Unterschale, die Oberschale und die turmförmigen Anbindungsglieder aus Metallblech gefertigt und miteinander verschweißt sind, wobei sich das jeweilige turmförmige Anbindungsglied durch eine Ausnehmung der Oberschale erstreckt und wobei das jeweilige turmförmige Anbindungsglied auf der Unterschale aufsitzt und an einer oder mehreren Aufsitzstellen mit der Unterschale verschweißt ist.

Hilfsrahmen für Kraftfahrzeuge, auch als Achsträger bezeichnet, sind in vielfältigen Ausführungen bekannt. Sie sollen bei hoher Festigkeit und Steifigkeit möglichst leicht sein und weisen üblicherweise Lageraufnahmen für Radführungselemente und andere Aggregate auf, um als Vormontageeinheit den Einbau kompletter Vorder- oder Hinterachsmodule mit Antriebseinheiten zu ermöglichen. Zur Anbindung eines solchen Hilfsrahmen an eine Fahrzeugkarosserie weist dieser Anbindungsabschnitte auf, die bei einigen bekannten Hilfsrahmen turmförmig ausgebildet sind und daher auch als turmförmige Anbindungsglieder oder als Turmabschnitte oder Anbindungssäulen bezeichnet werden können.

In der DE 10 2014 013 908 A1 ist ein Hilfsrahmen für ein Kraftfahrzeug beschrieben, der an einem Bodenabschnitt des Motorraums montiert wird. Der Hilfsrahmen ist aus rechten und linken Rahmenabschnitten einem vorderenRahmenabschnitt, der die beiden rechten und linken Rahmenabschnitte miteinander verbindet, und zwei turmförmigen Anbindungsgliedern zusammengesetzt. Die rechten und linken Rahmenabschnitte stellen dabei rechte und linke Anbindungsabschnitte für einen rechten unteren Querlenker und einen linken unteren Querlenker einer Vorderradaufhängung dar. Die beiden turmförmigen Anbindungsglieder stehen im Wesentlichen vertikal an den rechten und linken Rahmenabschnitten. Jedes der beiden turmförmigen Anbindungsglieder umfasst einen sich im Wesentlichen vertikal erstreckenden, aus einer Blechschale gebildeten Stangenabschnitt und einen oberen Turmabschnitt, welcher an einem oberen Abschnitt des Stangenabschnitts positioniert istund einen Anbindungsabschnitt eines oberen Querlenkers der Vorderradaufhängung darstellt. Der Hilfsrahmen ist aus Blechschalen aufgebaut und umfasst insbesondere eine Unter- und eine Oberschale. Das jeweilige turmförmige Anbindungsglied ist dabei in einem Ausschnittabschnitt der Oberschale und in einem Ausschnittabschnitt der Unterschale aufgenommen und steht etwas über die Unterseite der Unterschale nach unten vor. Vor den beiden turmförmigen Anbindungsgliedern ist jeweils ein Stabilisator vorgesehen, der durch einen Abstützsockel, der mit dem oberen Turmabschnitt sowie dem vertikalen Stangenabschnitt des jeweiligen turmförmigen Anbindungsgliedes verbunden ist, abgestützt wird. Diese bekannte Hilfsrahmenkonstruktion, bei welcher das turmförmige Anbindungsglied sowohl die Oberschale als auch die Unterschale durchdringt, zeichnet sich durch eine hohe Steifigkeit des turmförmigen Anbindungsgliedes und damit durch eine gute Lenkeranbindung aus. Crash-Tests haben jedoch ergeben, dass bei einem derartigen Hilfsrahmen, in Fahrtrichtung gesehen, hinter dem turmförmigen Anbindungsglied Probleme hinsichtlich der Festigkeit des Hilfsrahmens auftreten.

Aus der EP 3 020 618 A1 ist ein Hilfsrahmen für ein Kraftfahrzeug bekannt. Der Hilfsrahmen umfasst ein unteres und ein oberes Bauteil sowie mindestens zwei voneinander beabstandete, gegenüber der Oberseite des oberen Bauteils nach oben vorstehende, turmförmige Anbindungsglieder, wobei das untere und das obere Bauteil sowie die turmförmigen Anbindungsglieder aus Metallblech gefertigt und miteinander verschweißt sind. Das jeweilige turmförmige Anbindungsglied erstreckt sich dabei durch eine Ausnehmung des oberen Bauteils, wobei das turmförmige Anbindungsglied auf dem unteren Bauteil aufsitzt und mit diesem verschweißt ist.

Die WO 2018/065510 A1 offenbart ebenfalls einen Hilfsrahmen für ein Kraftfahrzeug, mit einer Unterschale, einer Oberschale und mindestens zwei voneinander beabstandeten, gegenüber der Oberseite der Oberschale nach oben vorstehenden, turmförmigen Anbindungsgliedern, wobei die Unterschale, die Oberschale und die turmförmigen Anbindungsglieder aus Metallblech gefertigt und miteinander verschweißt sind. Das jeweilige turmförmige Anbindungsglied erstreckt sich ebenfalls durch eine Ausnehmung der Oberschale, wobei das turmförmige Anbindungsglied auf der Unterschale aufsitzt und mit der Unterschale verschweißt ist.

Der vorliegenden Erfindung liegt die Aufgabe zugrunde, einen Hilfsrahmen der eingangs genannten Art zu schaffen, der bei relativ geringem Gewicht eine hohe Steifigkeit für seine Anbindung an eine Fahrzeugkarosserie und die Anbindung von Fahrwerkslenkern aufweist sowie eine verbesserte Festigkeit für ein verbessertes Crash-VerhaIten (Aufprall-Verhalten) bietet.

Gelöst wird diese Aufgabe durch einen Hilfsrahmen mit den in Anspruch 1 angegebenen Merkmalen. Bevorzugte und vorteilhafte Ausgestaltungen des erfindungsgemäßen Hilfsrahmens sind Gegenstand der auf Anspruch 1 rückbezogenen Unteransprüche.

Die Erfindung sieht bei einem Hilfsrahmen der eingangs genannten Art vor, dass das jeweilige turmförmige Anbindungsglied auf der Unterschale aufsitzt und an einer oder mehreren Aufsitzstellen mit der Unterschale verschweißt ist. Hierdurch lassen sich sowohl eine optimierte Steifigkeit für die Anbindung des Hilfsrahmens an eine Fahrzeugkarosserie und die Anbindung von Fahrwerkslenkern an dem Hilfsrahmen als auch eine optimierte Festigkeit des Hilfsrahmens hinter den turmförmigen Anbindungsgliedern für ein verbessertes Crash-Verhalten des Hilfsrahmens erzielen, wobei das Gewicht des Hilfsrahmens weitgehend konstant gehalten oder sogar reduziert werden kann.

Eine vorteilhafte Ausgestaltung des erfindungsgemäßen Hilfsrahmens ist dadurch gekennzeichnet, dass die Unterschale einen nach oben gebogenen Randabschnitt aufweist, wobei ein unterer Kantenabschnitt des turmförmigen Anbindungsgliedes mit dem nach oben gebogenen Randabschnitt der Unterschale verschweißt ist. Der nach oben gebogene Randabschnitt der Unterschale kann auch als Flansch bezeichnet werden und ist relativ zu einem plattenförmigen Boden- oder Grundabschnitt der Unterschale abgewinkelt bzw. abgekantet. Diese Ausgestaltung hat in Versuchen ein besonders gutes Crash-Verhalten des erfindungsgemäßen Hilfsrahmens gezeigt, wobei das Gewicht des Hilfsrahmens im Wesentlichen unverändert blieb bzw. zugleich verringert werden konnte. Insbesondere in fertigungstechnischer Hinsicht ist es dabei günstig, wenn gemäß einer weiteren Ausgestaltung der Erfindung der untere Kantenabschnitt des turmförmigen Anbindungsgliedes mit dem Randabschnitt der Unterschale entlang eines im Wesentlichen horizontal und/oder im Wesentlichen gerade verlaufenden Fügestoßes verschweißt ist.

Des Weiteren ist es hinsichtlich der Reduzierung des Gewichts des Hilfsrahmens sowie der Optimierung seines Crash-Verhaltens vorteilhaft, wenn gemäß einer weiteren Ausgestaltung der Erfindung der untere Kantenabschnitt des turmförmigen Anbindungsgliedes mit dem nach oben gebogenen Randabschnitt der Unterschale im Stumpfstoß verschweißt ist.

Eine weitere vorteilhafte Ausgestaltung des erfindungsgemäßen Hilfsrahmens sieht vor, dass sich an den unteren Kantenabschnitt des turmförmigen Anbindungsgliedes, welcher mit dem nach oben gebogenen Randabschnitt der Unterschale verschweißt ist, ein zweiter unterer Kantenabschnitt des turmförmigen Anbindungsgliedes anschließt, der relativ zu dem mit dem nach oben gebogenen Randabschnitt der Unterschale verschweißten Kantenabschnitt abgewinkelt und in einem Hohlraum, welcher durch die Unterschale und die Oberschale begrenzt ist, angeordnet ist. Durch diese Ausgestaltung lässt sich eine gleichmäßigere und damit günstigere Krafteinleitung bzw. Lastaufnahme von einem Fahrwerkslenker, insbesondere einem unteren Querlenker, in eine Schweißverbindung zwischen dem turmförmigen Anbindungsglied und der Unterschale des Hilfsrahmens erzielen. Hohe mechanische Spannungen, die bei hoher Belastung des unteren Fahrwerkslenkers, beispielsweise bei einem Aufprall (Crash) des Kraftfahrzeugs auftreten, können so von einem relativ großen Bereich des Hilfsrahmens, insbesondere einem relativ großen Bereich der Unterschale, besser aufgenommen werden.

Das turmförmige Anbindungsglied weist an seinem der Unterschale zugewandten Ende einen abgekanteten Flansch auf, der mit der Innenseite der Unterschale verschweißt ist. Der Flansch lässt sich fertigungstechnisch auf einfache Weise durch Umformen eines Blechabschnitts, aus welchem das turmförmige Anbindungsglied gebildet wird bzw. ist, herstellen. Der Flansch ermöglicht eine relativ ausgedehnte und damit spannungsreduzierte Anbindung des turmförmigen Anbindungsgliedes an der Unterschale des Hilfsrahmens.

Die Unterschale im Bereich des Flansches weist eine Ausnehmung auf, wobei der Flansch zumindest mit einem durch die Ausnehmung definierten Kantenabschnitt der Unterschale verschweißt ist. Diese Ausgestaltung ist nicht nur in fertigungstechnischer Hinsicht von Vorteil, indem sie eine gute Zugänglichkeit zu dem an die Unterschale anzuschweißenden Flansch bietet.

Sie ist zudem auch hinsichtlich einer Reduzierung des Gewichts des Hilfsrahmens günstig, da der aufgrund der Ausnehmung weggefallene Blechabschnitt das Gewicht der Unterschale und damit das Gewicht des Hilfsrahmens reduziert. Des Weiteren stellt die umlaufende Kante der Ausnehmung eine relativ lange Fügekante für die Ausbildung einer oder mehrerer Schweißnähte bereit. Vorzugsweise ist der Flansch durch eine im Wesentlichen umlaufende Schweißnaht an der umlaufenden Kante der Ausnehmung mit der Unterschale stoffschlüssig verbunden. Die Schweißnaht bzw. Schweißnähte erstrecken sich dabei beispielsweise über mindestens 75%, vorzugsweise mindestens 90%, besonders bevorzugt über mindestens 95% der Kantenlänge der Ausnehmung.

Eine weitere Ausgestaltung der Erfindung ist dadurch gekennzeichnet, dass das turmförmige Anbindungsglied ein Lagerauge zur gelenkigen Anbindung eines Fahrwerklenkers aufweist, wobei das Lagerauge zwischen einer Oberseite der Oberschale und der Unterseite der Unterschale angeordnet ist. Das Lagerauge ist dabei vorzugsweise in Form einer ein Innengewinde aufweisenden Buchse ausgeführt, die mit dem turmförmigen Anbindungsglied kraftschlüssig oder stoffschlüssig verbunden, beispielsweise verschweißt ist. Diese bevorzugte Ausgestaltung trägt zur Gewichtsreduzierung des Hilfsrahmens bei, da das turmförmige Anbindungsglied in diesem Fall aus relativ dünnem Stahlblech gefertigt werden kann, welches zur gelenkigen Anbindung des Fahrwerkslenkers selbst kein Gewinde aufweisen muss; das Gewinde wird vielmehr durch die mit dem Stahlblech des turmförmigen Anbindungsgliedes verbundene Buchse bereitgestellt.

Eine weitere bevorzugte Ausgestaltung des erfindungsgemäßen Hilfsrahmens sieht vor, dass das turmförmige Anbindungsglied aus mehreren Metallblechschalen zusammengesetzt ist, wobei eine seiner Metallblechschalen den Flansch und/oder das Lagerauge aufweist. Diese Ausgestaltung vereinfacht die Verwirklichung einer komplexen Körperform des turmförmigen Anbindungsgliedes. Ferner bietet diese Ausgestaltung die Möglichkeit, die Metallblechschalen aus Metallblechen, insbesondere Stahlblechen unterschiedlicher Blechdicke und/oder Werkstoffgüte zu fertigen. Somit kann das turmförmige Anbindungsglied bei geringem Gewicht im Sinne der Tailored-Blank-Technik belastungsgerecht ausgeführt werden.

Nach einer weiteren vorteilhaften Ausgestaltung der Erfindung ist in dem durch die Unterschale und die Oberschale begrenzten Hohlraum ein Verstärkungsblech angeordnet, welches mit dem turmförmigen Anbindungsglied, der Oberschale sowie der Unterschale verschweißt ist. Das Verstärkungsblech verbessert die Steifigkeit und das Crash-Verhalten des Hilfsrahmens und ermöglicht damit auch eine Reduzierung des Gewichts des Hilfsrahmens. In diesem Zusammenhang sieht eine weitere Ausgestaltung der Erfindung zudem vor, dass das Verstärkungsblech an seinem der Unterschale zugewandten Ende einen abgekanteten Flansch aufweist, der mit der Innenseite der Unterschale verschweißt ist. Auch ist es günstig, wenn gemäß einer weiteren Ausgestaltung der Erfindung die Unterschale im Bereich des Flansches eine Ausnehmung aufweist, wobei der Flansch des Verstärkungsblechs mit einem durch die Ausnehmung definierten Kantenabschnitt der Unterschale verschweißt ist.

Der Flansch des Verstärkungsblechs lässt sich auf einfache Weise durch Umformen des Verstärkungsblechs herstellen. Der Flansch des Verstärkungsblechs ermöglicht ebenfalls eine relativ ausgedehnte und damit spannungsreduzierte Anbindung des turmförmigen Anbindungsgliedes an der Unterschale des Hilfsrahmens. Die dem Flansch des Verstärkungsblechs zugeordnete Ausnehmung in der Unterschale bietet insbesondere eine gute Zugänglichkeit zu dem an die Unterschale anzuschweißenden Flansch.

In Bezug auf den oben erwähnten zweiten unteren Kantenabschnitt des turmförmigen Anbindungsgliedes und das Verstärkungsblech besteht eine weitere vorteilhafte Ausgestaltung darin, dass der zweite untere Kantenabschnitt durch einen Schenkel des turmförmigen Anbindungsgliedes definiert ist, wobei dieser Schenkel mit dem Verstärkungsblech verschweißt ist. Diese Ausgestaltung hat in Versuchen hervorragende Ergebnisse hinsichtlich der Optimierung des Crash-Verhaltens des Hilfsrahmens gezeigt. Durch diese Ausgestaltung lässt sich eine besonders günstige Krafteinleitung bzw. Lastaufnahme von einem unteren Fahrwerkslenker in eine Schweißverbindung zwischen dem turmförmigen Anbindungsglied und der Unterschale des Hilfsrahmens erzielen.

Der oben genannte, an dem turmförmigen Anbindungsglied abgekantete Flansch und der an dem Verstärkungsblech abgekantete Flansch sind vorzugsweise aufeinander zu gerichtet; die beiden Flansche sind also vorzugsweise einander zugewandt.

Eine weitere vorteilhafte Ausgestaltung des erfindungsgemäßen Hilfsrahmens ist dadurch gekennzeichnet, dass das turmförmige Anbindungsglied an seinem der Unterschale abgewandten bzw. oberen Ende mit einer separat gefertigten Metallblechschale versehen ist, wobei die Metallblechschale einen Anbindungsabschnitt zur Aufnahme einer Lagerbuchse aufweist bzw. mit einer Lagerbuchse versehen ist. Die separat gefertigte Metallblechschale ermöglicht auf fertigungstechnisch günstige Weise eine optimale Anbindung der Lagerbuchse an das turmförmige Anbindungsglied. Die Anbindung der Lagerbuchse lässt sich dabei materialsparend verwirklichen. Insbesondere können die Blechdicke und/oder die Festigkeitseigenschaften der separat gefertigten Metallblechschale relativ zu dem Metallblech des turmförmigen Anbindungsgliedes belastungsgerecht ausgewählt werden, um das Gewicht des Hilfsrahmens zu reduzieren.

In weiterer Ausgestaltung weist die separat gefertigte, die Lagerbuchse tragende Metallblechschale mindestens zwei Schenkel auf, wobei einer der Schenkel mit einer ersten Metallblechschale des turmförmigen Anbindungsgliedes verschweißt ist, während der zweite Schenkel mit einer zweiten Metallblechschale des turmförmigen Anbindungsgliedes verschweißt ist. Hierdurch lässt sich eine zuverlässige Verbindung der Metallblechschale mit dem turmförmigen Anbindungsglied sicherstellen. Auch ist diese Ausgestaltung hinsichtlich des Crash-Verhaltens des Hilfsrahmens, insbesondere hinsichtlich der Kraftübertragung von der Lagerbuchse in Richtung des turmförmigen Anbindungsgliedes vorteilhaft.

Nachfolgend wird die Erfindung anhand einer ein Ausführungsbeispiel darstellenden Zeichnung näher erläutert. Es zeigen:

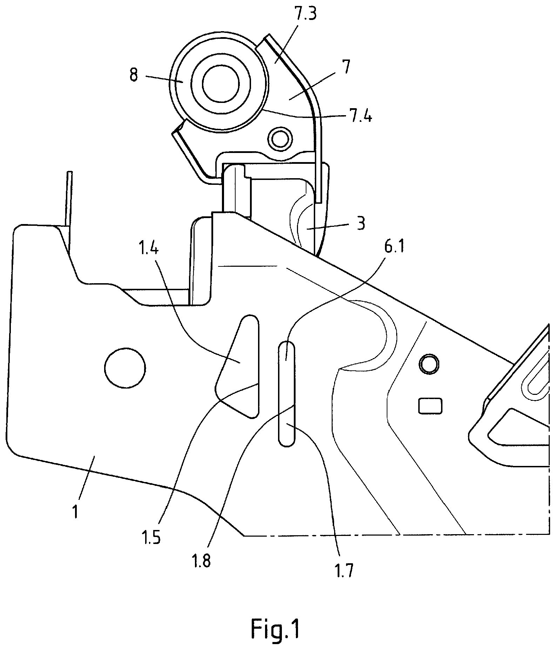

- Fig. 1: einen Abschnitt eines erfindungsgemäßen Hilfsrahmens, der aus einer Unterschale und einer Oberschale zusammengesetzt ist, in einer Unteransicht, wobei der Abschnitt ein gegenüber der Oberseite der Oberschale nach oben vorstehendes turmförmiges Anbindungsglied aufweist;
- Fig. 2: den Abschnitt des Hilfsrahmens aus Fig. 1 in einer perspektivischen Darstellung, wobei die Oberschale entfernt ist;
- Fig. 3: den Abschnitt des Hilfsrahmens aus Fig. 1 in einer perspektivischen Darstellung, wobei die Unterschale entfernt ist;
- Fig. 4: einen größeren Abschnitt des Hilfsrahmens aus Fig. 1 mit Oberschale und Unterschale in einer perspektivischen Darstellung, die der Perspektive in Fig. 3 entspricht;
- Fig. 5: den Abschnitt des Hilfsrahmens aus Fig. 1 mit Oberschale und Unterschale in einer perspektivischen Darstellung, die der Perspektive in Fig. 2 entspricht; und

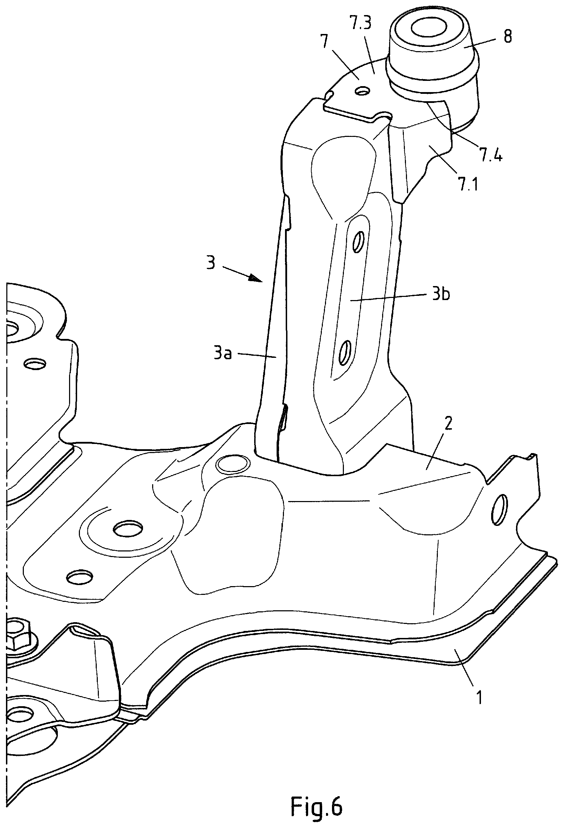

- Fig. 6: den Abschnitt des Hilfsrahmens aus Fig. 5 mit Oberschale und Unterschale in einer anderen perspektivischen Darstellung.

In der Zeichnung ist ein erfindungsgemäßer Hilfsrahmen für eine Kraftfahrzeug in Abschnitten und in verschiedenen Ansichten dargestellt. Der Hilfsrahmen weist Lageraufnahmen für Fahrwerkslenker auf, um als Vormontageeinheit den Einbau eines Vorder- oder Hinterachsmoduls zu ermöglichen. Der Hilfsrahmen ist aus dreidimensional geformten Metallblechen zusammengesetzt, die miteinander verschweißt sind. Die dreidimensional geformten Metallbleche umfassen unter anderem eine Unterschale 1 und eine Oberschale 2. Der Hilfsrahmen weist mindestens zwei voneinander beabstandete, gegenüber der Oberseite der Oberschale 2 nach oben vorstehende turmförmige Anbindungsglieder 3 auf. Die in der Zeichnung dargestellten Abschnitte des Hilfsrahmens zeigen allerdings nur ein von zwei turmförmigen Anbindungsglied 3. Die beiden turmförmigen Anbindungsglieder 3 sind im Wesentlichen spiegelbildlich zueinander ausgeführt.

Das jeweilige turmförmige Anbindungsglied 3 ist mit der Unterschale 1 und der Oberschale 2 verschweißt. Es erstreckt sich durch eine Ausnehmung 2.1 der Oberschale 2 bis zu der Unterschale 1 und sitzt auf der Unterschale 1 auf, wo es an mindestens einer Aufsitzstelle, vorzugsweise an mindestens zwei Aufsitzstellen 1.1, 1.2 mit der Unterschale 1 verschweißt ist.

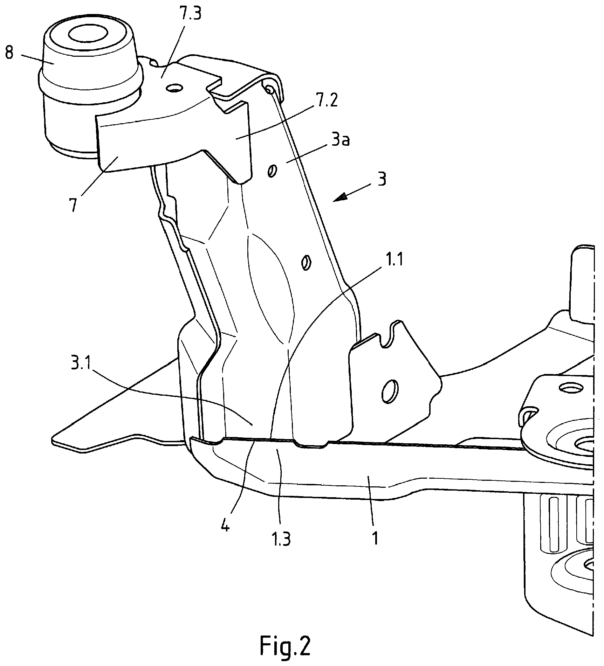

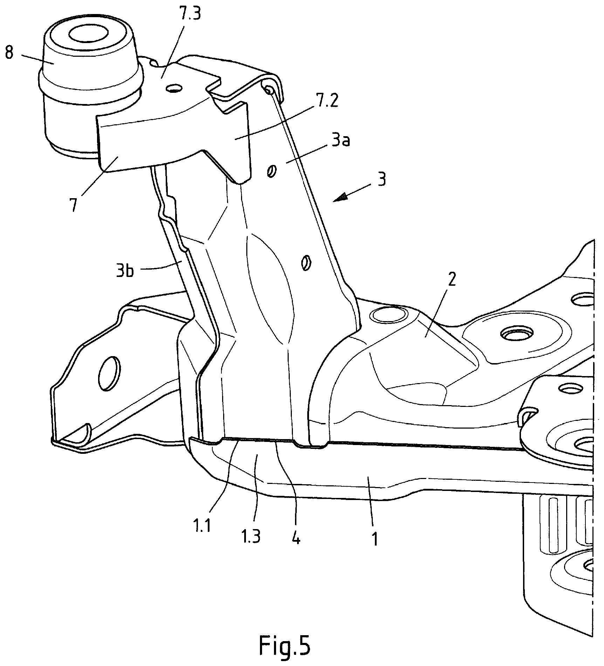

Die Unterschale 1 weist einen relativ zu einem plattenförmigen Bodenabschnitt oder Grundabschnitt der Unterschale nach oben gebogenen Randabschnitt 1.3 auf, der mit einem unteren Kantenabschnitt 3.1 des turmförmigen Anbindungsgliedes 3 verschweißt ist. In den Figuren 2 und 5 ist zu erkennen, dass der untere Kantenabschnitt 3.1 des turmförmigen Anbindungsgliedes 3 mit dem Randabschnitt 1.3 der Unterschale 1 entlang eines im Wesentlichen gerade bzw. horizontal verlaufenden Fügestoßes 4 verschweißt ist. Der Fügestoß 4 ist dabei als Überlappstoß oder vorzugsweise als Stumpfstoß ausgeführt.

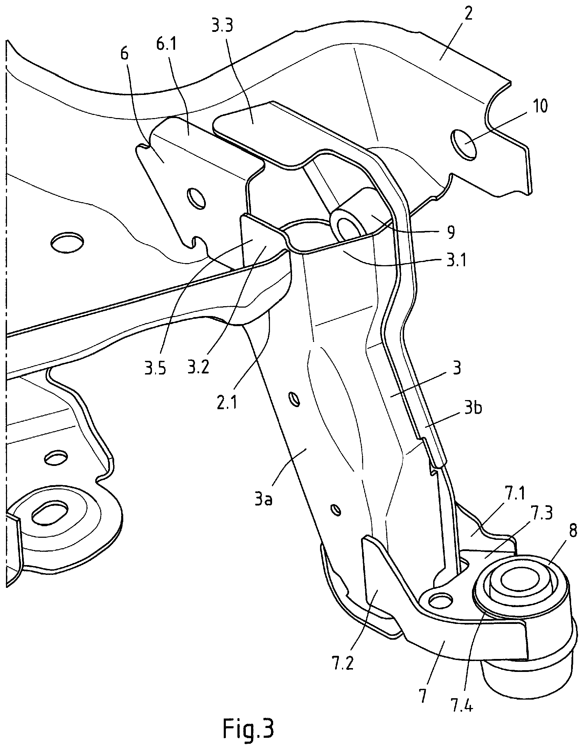

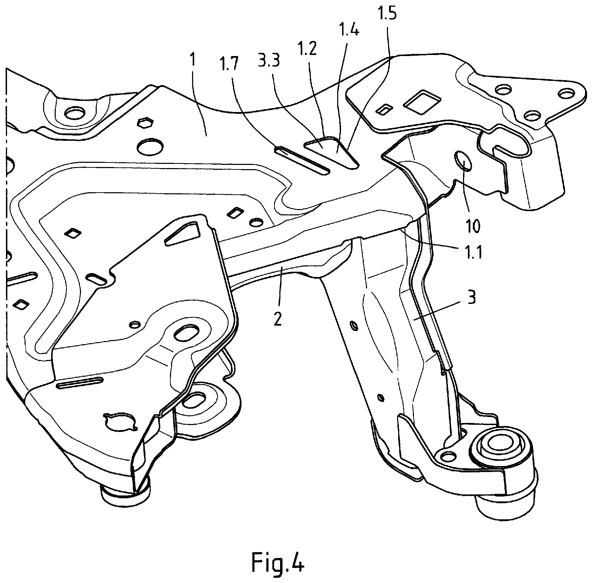

Das turmförmige Anbindungsglied 3 weist an seinem der Unterschale 1 zugewandten Ende einen abgekanteten Flansch 3.3 auf, der mit der Innenseite der Unterschale 1 verschweißt ist (vgl. Fig. 3). Die Unterschale 1 ist hierzu im Bereich des Flansches 3.3 mit einer Ausnehmung 1.4 versehen, wobei der Flansch 3.3 zumindest mit einem durch die Ausnehmung 1.4 definierten Kantenabschnitt 1.5 der Unterschale 1 teilweise verschweißt ist. Die Ausnehmung 1.4 ist beispielsweise derart ausgeführt, dass sie mindestens zwei im Wesentlichen geradlinige Kantenabschnitte 1.5 aufweist, die schräg zueinander verlaufen. In dem in Fig. 4 gezeigten Ausführungsbeispiel weist die Ausnehmung 1.4 eine im Wesentlichen dreieckige Form mit abgerundeten Ecken auf. Vorzugsweise ist die Schweißverbindung des Flansches 3.3 mit der durch die Ausnehmung 1.4 definierten Kante als umlaufende Kehlschweißnaht ausgeführt.

In Fig. 3 ist gezeigt, dass sich an dem unteren Kantenabschnitt 3.1 des turmförmigen Anbindungsgliedes 3 einstückig ein zweiter unterer Kantenabschnitt 3.2 anschließt, der relativ zu dem Kantenabschnitt 3.1 abgewinkelt und in einem Hohlraum, der durch die Unterschale 1 und die Oberschale 2 begrenzt ist, angeordnet ist. Der Kantenabschnitt 3.2 ist durch einen abgekanteten Schenkel 3.5 des turmförmigen Anbindungsgliedes 3 definiert. Des Weiteren ist in dem durch die Unterschale 1 und die Oberschale 2 begrenzten Hohlraum ein Verstärkungsblech 6 angeordnet, das mit dem Schenkel 3.5 des turmförmigen Anbindungsgliedes 3, der Oberschale 2 und der Unterschale 1 verschweißt ist. Das Verstärkungsblech 6 weist an seinem der Unterschale 1 zugewandten Ende einen durch Abkanten gebildeten Flansch 6.1 auf, der mit der Innenseite der Unterschale 1 verschweißt ist. Die Unterschale 1 weist hierzu im Bereich des Flansches 6.1 eine Ausnehmung 1.7 auf, wobei der Flansch 6.1 des Verstärkungsblechs 6 mit einem durch die Ausnehmung 1.7 definierten Kantenabschnitt 1.8 der Unterschale 1 verschweißt ist. Im Unterschied zu der dem Flansch 3.3 zugeordneten Ausnehmung 1.4 ist die dem Flansch 6.1 des Verstärkungsblechs 6 zugeordnete Ausnehmung 1.7 schlitzförmig ausgebildet. Die Ausnehmung 1.7 weist parallel zueinander verlaufende Kantenabschnitte auf, die in halbrunden Enden ineinander übergehen. Der an dem turmförmigen Anbindungsglied 3 ausgebildete Flansch 3.3 und der an dem Verstärkungsblech 6 ausgebildete Flansch 6.1 sind aufeinander zu gerichtet, d.h. sie sind vorzugsweise einander zugewandt.

Zur gelenkigen Anbindung eines Fahrwerklenkers (nicht gezeigt) weist das turmförmige Anbindungsglied 3 ein Lagerauge 9 auf, welches zwischen einer Oberseite der Oberschale 2 und der Unterseite der Unterschale 1 angeordnet ist (vgl. Fig. 3). Das Lagerauge 9 ist beispielsweise in Form einer Buchse ausgebildet, die ein Innengewinde aufweist. Die Buchse 9 steht in Richtung des unteren Kantenabschnitts 3.2 des turmförmigen Anbindungsgliedes 3, welcher in dem durch die Unterschale 1 und die Oberschale 2 begrenzten Hohlraum angeordnet ist, vor. Dem Lagerauge 9 ist ein damit fluchtendes Lagerauge 10 zugeordnet, welches in der Oberschale 2 ausgebildet ist. Das Lagerauge 10 ist beispielsweise als Bohrung oder Stanzloch in der Oberschale 2 ausgeführt. Das turmförmige Anbindungsglied 3 ist aus mehreren Metallblechschalen 3a, 3b zusammengesetzt, wobei die Metallblechschale 3b den Flansch 3.3 und das Lagerauge 9 aufweist.

An seinem der Unterschale 1 abgewandten Ende ist das turmförmige Anbindungsglied 3 mit einer separat gefertigten Metallblechschale 7 versehen, die einen Anbindungsabschnitt zur Aufnahme einer Lagerbuchse 8 aufweist. Die Metallblechschale 7 hat zwei Schenkel 7.1, 7.2, wobei einer der Schenkel 7.1 mit einer ersten Metallblechschale 3b und der zweite Schenkel 7.2 mit einer zweiten Metallblechschale 3a des turmförmigen Anbindungsgliedes 3 verschweißt ist. Der Anbindungsabschnitt zur Aufnahme einer Lagerbuchse 8 ist an einem plattenförmigen Mittelsteg 7.3 der Metallblechschale 7 ausgebildet. In dem Mittelsteg 7.3 ist eine halbkreisförmige Einbuchtung 7.4 ausgeschnitten, in welche die Lagerbuchse 8 formschlüssig eingesetzt und mit dem Mittelsteg 7.3 verschweißt ist.

Die verschiedenen dreidimensional geformten Metallbleche, aus denen der erfindungsgemäße Hilfsrahmen zusammengesetzt ist, sind vorzugsweise aus Stahlblech gefertigt. Die Unterschale 1 und die Oberschale 2 können dabei aus Metallblechen bzw. Stahlblechen unterschiedlicher Blechdicke und/oder Werkstoffgüte, insbesondere unterschiedlicher Zugfestigkeit gefertigt sein. Auch liegt es Rahmen der Erfindung, dass die Metallblechschalen 3a, 3b des turmförmigen Anbindungsgliedes 3, das Verstärkungsblech 6 und die Metallblechschale 7 aus Stahlblechen unterschiedlicher Blechdicke und/oder Werkstoffgüte, insbesondere unterschiedlicher Zugfestigkeit gefertigt sind.

Die Ausführung des erfindungsgemäßen Hilfsrahmens ist nicht auf das in der Zeichnung dargestellte Ausführungsbeispiel beschränkt. Vielmehr sind zahlreiche Varianten denkbar, die auch bei einer von dem gezeigten Beispiel abweichenden Ausgestaltung von der in den beigefügten Ansprüchen angegebenen Erfindung Gebrauch machen.

## Patentansprüche

1. Hilfsrahmen für ein Kraftfahrzeug, mit einer Unterschale (1), einer Oberschale (2) und mindestens zwei voneinander beabstandeten, gegenüber der Oberseite der Oberschale (2) nach oben vorstehenden, turmförmigen Anbindungsgliedern (3), wobei die Unterschale (1), die Oberschale (2) und die turmförmigen Anbindungsglieder (3) aus Metallblech gefertigt und miteinander verschweißt sind, wobei sich das jeweilige turmförmige Anbindungsglied (3) durch eine Ausnehmung (2.1) der Oberschale (2) erstreckt, und wobei das jeweilige turmförmige Anbindungsglied (3) auf der Unterschale (1) aufsitzt und an einer oder mehreren Aufsitzstellen (1.1, 1.2) mit der Unterschale (1) verschweißt ist, **dadurch gekennzeichnet, dass** das turmförmige Anbindungsglied (3) an seinem der Unterschale (1) zugewandten Ende einen abgekanteten Flansch (3.3) aufweist, der mit der Innenseite der Unterschale (1) verschweißt ist, und dass die Unterschale (1) im Bereich des Flansches (3.3) eine Ausnehmung (1.4) aufweist, wobei der Flansch (3.3) zumindest mit einem durch die Ausnehmung (1.4) definierten Kantenabschnitt (1.5) der Unterschale (1) verschweißt ist.

2. Hilfsrahmen nach Anspruch 1, **dadurch gekennzeichnet, dass** die Unterschale (1) einen nach oben gebogenen Randabschnitt (1.3) aufweist, wobei ein unterer Kantenabschnitt (3.1) des turmförmigen Anbindungsgliedes (3) mit dem nach oben gebogenen Randabschnitt (1.3) der Unterschale (1) verschweißt ist.

3. Hilfsrahmen nach Anspruch 2, **dadurch gekennzeichnet, dass** der untere Kantenabschnitt (3.1) des turmförmigen Anbindungsgliedes (3) mit dem nach oben gebogenen Randabschnitt (1.3) der Unterschale (1) entlang eines im Wesentlichen horizontal und/oder im Wesentlichen gerade verlaufenden Fügestoßes (4) verschweißt ist.

4. Hilfsrahmen nach Anspruch 2 oder 3, **dadurch gekennzeichnet, dass** der untere Kantenabschnitt (3.1) des turmförmigen Anbindungsgliedes (3) mit dem nach oben gebogenen Randabschnitt (1.3) der Unterschale (1) im Stumpfstoß verschweißt ist.

5. Hilfsrahmen nach einem der Ansprüche 2 bis 4, **dadurch gekennzeichnet, dass** sich an den unteren Kantenabschnitt (3.1) des turmförmigen Anbindungsgliedes (3), welcher mit dem nach oben gebogenen Randabschnitt (1.3) der Unterschale (1) verschweißt ist, ein zweiter unterer Kantenabschnitt (3.2) des turmförmigen Anbindungsgliedes (3) anschließt, der relativ zu dem mit dem nach oben gebogenen Randabschnitt (1.3) der Unterschale (1) verschweißten Kantenabschnitt (3.1) abgewinkelt und in dem durch die Unterschale (1) und die Oberschale (2) begrenzten Hohlraum angeordnet ist.

6. Hilfsrahmen nach einem der Ansprüche 1 bis 5, **dadurch gekennzeichnet, dass** das turmförmige Anbindungsglied (3) ein Lagerauge (9) zur gelenkigen Anbindung eines Fahrwerklenkers aufweist, wobei das Lagerauge (9) zwischen einer Oberseite der Oberschale (2) und der Unterseite der Unterschale (1) angeordnet ist.

7. Hilfsrahmen nach einem der Ansprüche 1 bis 6, **dadurch gekennzeichnet, dass** das turmförmige Anbindungsglied (3) aus mehreren Metallblechschalen (3a, 3b) zusammengesetzt ist, wobei eine seiner Metallblechschalen (3b) den Flansch (3.3) und/oder das Lagerauge (9) aufweist.

8. Hilfsrahmen nach einem der Ansprüche 1 bis 7, **dadurch gekennzeichnet, dass** in dem durch die Unterschale (1) und die Oberschale (2) begrenzten Hohlraum ein Verstärkungsblech (6) angeordnet ist, das mit dem turmförmigen Anbindungsglied (3), der Oberschale (2) sowie der Unterschale (1) verschweißt ist.

9. Hilfsrahmen nach Anspruch 8, **dadurch gekennzeichnet, dass** das Verstärkungsblech (6) an seinem der Unterschale (1) zugewandten Ende einen abgekanteten Flansch (6.1) aufweist, der mit der Innenseite der Unterschale (1) verschweißt ist.

10. Hilfsrahmen nach Anspruch 9, **dadurch gekennzeichnet, dass** die Unterschale (1) im Bereich des Flansches (6.1) eine Ausnehmung (1.7) aufweist, wobei der Flansch (6.1) des Verstärkungsblechs (6) mit einem durch die Ausnehmung (1.7) definierten Kantenabschnitt (1.8) der Unterschale (1) verschweißt ist.

11. Hilfsrahmen nach Anspruch 5 und einem der Ansprüche 8 bis 10, **dadurch gekennzeichnet, dass** der zweite untere Kantenabschnitt (3.2) durch einen Schenkel (3.5) des turmförmigen Anbindungsgliedes (3) definiert ist, wobei der Schenkel (3.5) mit dem Verstärkungsblech (6) verschweißt ist.

12. Hilfsrahmen nach einem der Ansprüche 1 bis 11, **dadurch gekennzeichnet, dass** das turmförmige Anbindungsglied (3) an seinem der Unterschale (1) abgewandten Ende mit einer separat gefertigten Metallblechschale (7) versehen ist, wobei die Metallblechschale (7) einen Anbindungsabschnitt zur Aufnahme einer Lagerbuchse (8) aufweist.

13. Hilfsrahmen nach Anspruch 12, **dadurch gekennzeichnet, dass** die Metallblechschale (7) mindestens zwei Schenkel (7.1, 7.2) aufweist, wobei einer der Schenkel (7.1) mit einer ersten Metallblechschale (3b) des turmförmigen Anbindungsgliedes (3) verschweißt ist, während der zweite Schenkel (7.2) mit einer zweiten Metallblechschale (3a) des turmförmigen Anbindungsgliedes (3) verschweißt ist.

## Claims

1. Subframe for a motor vehicle, having a lower shell (1), an upper shell (2) and at least two tower-shaped connecting members (3) which are spaced apart from one another and project upwards with respect to the upper side of the upper shell (2), the lower shell (1), the upper shell (2) and the tower-shaped connecting members (3) being produced from sheet metal and welded to one another, the respective tower-shaped connecting member (3) extending through a recess (2. 1) of the upper shell (2), and wherein the respective tower-shaped connecting member (3) sits on the lower shell (1) and is welded to the lower shell (1) at one or more seating points (1.1,1.2), **characterized in that** the tower-shaped connecting member (3) has, at its end facing the lower shell (1), a folded flange (3.3) which is welded to the inside of the lower shell (1), and **in that** the lower shell (1) has a recess (1.4) in the region of the flange (3.3), the flange (3.3) being welded at least to an edge portion (1.5) defined by the recess (1.4) of the lower shell (1).

2. Subframe according to claim 1, **characterized in that** the lower shell (1) has an upwardly bended edge portion (1.3), a lower edge portion (3.1) of the tower-shaped connecting member (3) being welded to the upwardly bended edge portion (1.3) of the lower shell (1).

3. Subframe according to claim 2, **characterized in that** the lower edge portion (3.1) of the tower-shaped connecting member (3) is welded to the upwardly bended edge portion (1.3) of the lower shell (1) along a substantially horizontal and/or substantially straight joint (4).

4. Subframe according to claim 2 or 3, **characterized in that** the lower edge portion (3.1) of the tower-shaped connecting member (3) is welded to the upwardly bended edge portion (1.3) of the lower shell (1) in the butt joint.

5. Subframe according to one of the claims 2 to 4, **characterized in that** the lower edge portion (3.1) of the tower-shaped connecting member (3), which is welded to the upwardly bended edge portion (1.3) of the lower shell (1), is followed by a second lower edge portion (3.2) of the tower-shaped connecting member (3), the second lower edge portion is angled relative to the edge portion (3.1) welded to the upwardly bended edge portion (1.3) of the lower shell (1) and is arranged in the cavity bounded by the lower shell (1) and the upper shell (2).

6. Subframe according to any one of claims 1 to 5, **characterized in that** the tower-shaped connecting member (3) has a bearing eye (9) for articulated connection of a landing gear link, the bearing eye (9) being arranged between an upper side of the upper shell (2) and the lower side of the lower shell (1).

7. Subframe according to any one of claims 1 to 6, **characterized in that** the tower-shaped connecting member (3) is composed of a plurality of sheet metal shells (3a, 3b), one of its sheet metal shells (3b) having the flange (3.3) and/or the bearing eye (9).

8. Subframe according to one of claims 1 to 7, **characterized in that** a reinforcing plate (6) is arranged in the cavity bounded by the lower shell (1) and the upper shell (2), which reinforcing plate (6) is welded to the tower-shaped connecting member (3), the upper shell (2) and the lower shell (1).

9. Subframe according to claim 8, **characterized in that** the reinforcing plate (6) has, at its end facing the lower shell (1), a folded flange (6.1) which is welded to the inside of the lower shell (1).

10. Subframe according to claim 9, **characterized in that** the lower shell (1) has a recess (1.7) in the region of the flange (6.1), the flange (6.1) of the reinforcing plate (6) being welded to an edge portion (1.8) defined by the recess (1.7) of the lower shell (1).

11. Subframe according to claim 5 and one of claims 8 to 10, **characterized in that** the second lower edge portion (3.2) is defined by a leg (3.5) of the tower-shaped connecting member (3), said leg (3.5) being welded to the reinforcing plate (6).

12. Subframe according to one of claims 1 to 11, **characterized in that** the tower-shaped connecting member (3) is provided at its end facing away from the lower shell (1) with a separately manufactured sheet metal shell (7), the sheet metal shell (7) having a connecting portion for receiving a bearing bush (8).

13. Subframe according to claim 12, **characterized in that** the sheet metal shell (7) has at least two legs (7.1, 7.2), one of the legs (7.1) being welded to a first sheet metal shell (3b) of the tower-shaped connecting member (3), while the second leg (7.2) is welded to a second sheet metal shell (3a) of the tower-shaped connecting member (3).

## Revendications

1. Cadre auxiliaire pour véhicule automobile, avec une coque inférieure (1), une coque supérieure (2) et au moins deux éléments de raccordement en forme de tour (3), espacés l'un de l'autre, faisant saillie vers le haut par rapport au côté supérieur de la coque supérieure (2), dans lequel la coque inférieure (1), la coque supérieure (2) et les éléments de raccordement en forme de tour (3) sont fabriqués en tôle métallique et soudés ensemble, dans lequel l'élément de raccordement respectif en forme de tour (3) s'étend à travers un évidement (2.1) de la coque supérieure (2), et dans lequel l'élément de raccordement respectif en forme de tour (3) repose sur la coque inférieure (1) et est soudé en un ou plusieurs points de montage (1.1, 1.2) à la coque inférieure (1), **caractérisé en ce que** l'élément de raccordement en forme de tour (3) présente à son extrémité orientée vers la coque inférieure (1) une bride rabattue (3.3), qui est soudée au côté interne de la coque inférieure (1), ét **en ce que** la coque inférieure (1) présente un évidement (1.4) dans la zone de la bride (3.3), dans lequel la bride (3.3) est soudée au moins à une section d'arête (1.5), définie par l'évidement (1.4), de la coque inférieure (1).

2. Cadre auxiliaire selon la revendication 1, **caractérisé en ce que** la coque inférieure (1) présente une section de bord (1.3) incurvée vers le haut, dans lequel une section d'arête inférieure (3.1) de l'élément de raccordement en forme de tour (3) est soudée à la section de bord (1.3) incurvée vers le haut de la coque inférieure (1).

3. Cadre auxiliaire selon la revendication 2, **caractérisé en ce que** la section d'arête inférieure (3.1) de l'élément de raccordement en forme de tour (3) est soudée à la section de bord (1.3) incurvée vers le haut de la coque inférieure (1) le long d'un joint d'assemblage (4) passant essentiellement horizontalement et / ou essentiellement de façon rectiligne.

4. Cadre auxiliaire selon la revendication 2 ou 3, **caractérisé en ce que** la section d'arête inférieure (3.1) de l'élément de raccordement en forme de tour (3) est soudée en assemblage bout à bout à la section de bord (1.3) incurvée vers le haut de la coque inférieure (1).

5. Cadre auxiliaire selon l'une des revendications 2 à 4, **caractérisé en ce qu'**une deuxième section d'arête inférieure (3.2) de l'élément de raccordement en forme de tour (3), qui est en angle par rapport à la section d'arête (3.1), soudée à la section de bord (1.3) incurvée vers le haut de la coque inférieure (1), et est disposée dans la cavité délimitée par la coque inférieure (1) et la coque supérieure (2), se raccorde à la section d'arête inférieure (3.1) de l'élément de raccordement en forme de tour (3), lequel est soudé à la section de bord (1.3) incurvée vers le haut de la coque inférieure (1).

6. Cadre auxiliaire selon l'une des revendications 1 à 5, **caractérisé en ce que** l'élément de raccordement en forme de tour (3) présente un œil de palier (9) pour le raccordement articulé d'un mécanisme de roulement, dans lequel l'œil de palier (9) est disposé entre un côté supérieur de la coque supérieure (2) et le côté inférieur de la coque inférieure (1).

7. Cadre auxiliaire selon l'une des revendications 1 à 6, **caractérisé en ce que** l'élément de raccordement en forme de tour (3) est composé de plusieurs coques en tôle métallique (3a, 3b), dans lequel l'une de ses coques en tôle métallique (3b) présente la bride (3.3) et / ou l'œil de palier (9).

8. Cadre auxiliaire selon l'une des revendications 1 à 7, **caractérisé en ce que** dans la cavité délimitée par la coque inférieure (1) et la coque supérieure (2) est disposée une tôle de renforcement (6) qui est soudée à l'élément de raccordement en forme de tour (3), la coque supérieure (2) ainsi que la coque inférieure (1).

9. Cadre auxiliaire selon la revendication 8, **caractérisé en ce que** la tôle de renforcement (6) présente à son extrémité orientée vers la coque inférieure (1), une bride rabattue (6.1) qui est soudée au côté interne de la coque inférieure (1).

10. Cadre auxiliaire selon la revendication 9, **caractérisé en ce que** la coque inférieure (1) présente un évidement (1.7) dans la zone de la bride (6.1), dans lequel la bride (6.1) de la tôle de renforcement (6) est soudée à une section de bord (1.8), définie par l'évidement (1.7), de la coque inférieure (1).

11. Cadre auxiliaire selon la revendication 5 et l'une des revendications 8 à 10, **caractérisé en ce que** la deuxième section de bord inférieure (3.2) est définie par une branche (3.5) de l'élément de raccordement en forme de tour (3), dans lequel la branche (3.5) est soudée à la tôle de renforcement (6).

12. Cadre auxiliaire selon l'une des revendications 1 à 11, **caractérisé en ce que** l'élément de raccordement en forme de tour (3) est doté à son extrémité opposée à la coque inférieure (1) d'une coque en tôle métallique (7) fabriquée séparément, dans lequel la coque en tôle métallique (7) présente une section de raccordement pour loger un coussinet (8).

13. Cadre auxiliaire selon la revendication 12, **caractérisé en ce que** la coque en tôle métallique (7) présente au moins deux branches (7.1, 7.2), l'une des branches (7.1) étant soudée à une première coque en tôle métallique (3b) de l'élément de raccordement en forme de tour (3), tandis que la deuxième branche (7.2) est soudée à une deuxième coupe en tôle métallique (3a) de l'élément de raccordement en forme de tour (3).
